# EUROPÄISCHE PATENTSCHRIFT

(11) **EP 1 900 273 B1**
(45) Veröffentlichungstag und Bekanntmachung des Hinweises auf die Patenterteilung: **28.10.2009**
(21) Anmeldenummer: 07114895.1
(22) Anmeldetag: 24.08.2007
(51) Int. Cl.: A01D 75/18

(54) **Fremdkörpernachweiseinrichtung für eine landwirtschaftliche Erntemaschine**
Foreign body detection device for an agricultural harvester
Dispositif de vérification de corps étranger pour une moissonneuse agricole

(30) Priorität: 08.09.2006 DE 102006042373
(43) Veröffentlichungstag der Anmeldung: 19.03.2008
(73) Patentinhaber: Deere & Company, Moline, IL 61265-8098 (US)
(72) Erfinder: Schäfer, Rainer, 66482 Zweibrücken (DE)
(74) Vertreter: Holst, Sönke

(56) Entgegenhaltungen:
- EP-A- 1 632 128
- US-A- 4 805 385
- US-A1- 2003 115 846

## Beschreibung

Die Erfindung betrifft eine Fremdkörpernachweiseinrichtung für eine landwirtschaftliche Erntemaschine, mit einem quer zu einer Erntegutförderrichtung beweglich angebrachten, während des Erntebetriebs am aufgenommenen Erntegut anliegenden Fühlelement.

### Stand der Technik

Im Stand der Technik sind verschiedene Nachweiseinrichtungen für mit dem Erntegut aufgenommene Fremdkörper in landwirtschaftlichen Maschinen beschrieben worden:

Gebräuchlich sind Metalldetektoren, die einen Einzugkanal der Erntemaschine mit einem Magnetfeld beaufschlagen. Induktionsspulen erfassen Änderungen des Magnetfelds, die durch einen mit dem Erntegut aufgenommenen, ferromagnetischen Fremdkörper verursacht werden und sind mit einer Nachweisschaltung verbunden, die ggf. ein Anhalten der Einzugselemente der Erntemaschine veranlasst. Mit diesen Metalldetektoren können Fremdkörper aus nicht-ferromagnetische Materialien nicht nachgewiesen werden.

Weiterhin wurden mechanische Lösungen vorgeschlagen, bei denen die Form der Einzugselemente veränderlich ist und erkannt wird (DD 117 030 A und DD 120 782 A). Als nachteilig ist der technische Aufwand und die fehlende Zuverlässigkeit der mechanischen Bauteile anzusehen, weshalb derartige Lösungen bisher nicht in der Praxis anzutreffen sind.

Außerdem wurden auf Schallsignalen beruhende Vibrationssensoren beschrieben, die bei einem Aufprall eines Fremdkörpers auf eine Zuführwalze im Einzugskanal entstehende Schwingungen erfassen (US 5 092 818 A, US 7 022 012 B). Bei derartigen Sensoren können in der Erntegutmatte eingebettete Fremdkörper nicht oder mit verminderter Empfindlichkeit nachgewiesen werden.

Schließlich wurde vorgeschlagen, eine sich abhängig von der Dicke der Erntegutmatte nach oben und unten bewegende Vorpresswalze mit einem Beschleunigungsmesser auszustatten (EP 0 217 417 A, EP 0 217 418 A, DE 199 04 626 A, EP 1 632 128 A und US 6 637 179 B). Wenn ein bestimmter Beschleunigungswert der Vorpresswalze überschritten wird, wird davon ausgegangen, dass ein Fremdkörper, z. B. ein Stein, in der Erntegutmatte enthalten ist, und es wird selbsttätig ein Anhalten der Einzugselemente der Erntemaschine veranlasst. Die Beschleunigung der Vorpresswalze quer zur Förderrichtung kann auch durch Erfassung des Drucks in einem mit ihr verbundenen Hydraulikzylinder gemessen werden, wie in der DE 296 16 473 U beschrieben.

Die EP 0 217 417 A, EP 0 217 418 A und DE 199 04 626 C beschreiben den Beschleunigungsmesser nicht näher. Die Beschleunigungsmesser gemäß EP 1 632 128 A und US 6 637 179 B umfassen jeweils eine beweglich mit der Vorpresswalze verbundene Masse und einen Schalter oder ein Potentiometer, der oder das die Position der Masse gegenüber der Vorpresswalze erfasst. Als nachteilig ist bei diesen Nachweiseinrichtungen anzusehen, dass für den Beschleunigungsmesser eine Anzahl separater Bauelemente erforderlich ist. Außerdem kann die Funktion des Beschleunigungsmessers nach längerer Betriebszeit durch Verschmutzung beeinträchtigt werden, insbesondere wenn er nicht in einem versiegelten Gehäuse eingebaut ist oder die Versiegelung schadhaft ist.

Zur Ertragskartierung und zur selbsttätigen Dosierung von Siliermitteln wurde vorgeschlagen, die Position von quer zur Förderrichtung bewegbaren Vorpresswalzen durch Potentiometer zu erfassen (DE 195 24 752 A, DE 199 03 471 C).

### Aufgabe der Erfindung

Die der Erfindung zu Grunde liegende Aufgabe wird darin gesehen, eine Nachweiseinrichtung für mit dem Erntegut aufgenommene Fremdkörper eingangs genannter Art bereitzustellen, die mit geringem Aufwand einen Nachweis eines eventuell aufgenommenen Fremdkörpers ermöglicht.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine Fremdkörpernachweiseinrichtung umfasst einen Positionssensor, der die Position eines quer zur Erntegutförderrichtung beweglichen Fühlelements erfasst. Das Fühlelement liegt während des Erntebetriebs am aufgenommenen Erntegut an und bewegt sich in Abhängigkeit von der Stärke der aufgenommenen Erntegutmatte quer zur Erntegutförderrichtung. Der Positionssensor ist mit einer Auswertungsschaltung verbunden, welche die Signale des Positionssensors zur Berechnung einer Information über die Geschwindigkeit und/oder Beschleunigung des Fühlelements verwendet, insbesondere indem die erste und/oder zweite zeitliche Ableitung des Signals des Positionssensors gebildet wird. Diese Information wird durch die Auswertungsschaltung mit einem Schwellenwert verglichen, um in dem Fall, dass die berechnete Information über die Geschwindigkeit bzw. Beschleunigung des Fühlelements darauf hinweist, dass ein Fremdkörper im Erntegut enthalten ist, einen entsprechenden Signalwert abzugeben.

Auf diese Weise realisiert man mit einfachen Mitteln einen Nachweis eventuell mit der Erntegutmatte aufgenommener Fremdkörper.

Das Fühlelement ist vorzugsweise in Richtung auf das Erntegut vorgespannt, so dass es eine Presswirkung darauf ausübt. Als Fühlelement kommt insbesondere eine Förderwalze (z. B. Vorpresswalze im Einzugskanal eines Feldhäckslers oder eine vertikal beweglich angeordnete, untere Schrägfördererwalze im Schrägförderer eines Mähdreschers) in Frage, die aktiv angetrieben sein oder frei mit dem Erntegut mitlaufen kann und vorzugsweise im Einzugsförderer der Erntemaschine angeordnet ist. Es können jedoch auch mit der Erntegutmatte zusammenwirkende, separate Tastbügel oder -fühler o. ä. verwendet werden, die nicht zur aktiven Förderung des Ernteguts dienen.

Der Signalwert der Auswertungsschaltung wird zweckmäßigerweise dazu verwendet, einen Einzugsförderer der Erntemaschine selbsttätig anzuhalten, wenn die von der Auswertungsschaltung berechnete Geschwindigkeit bzw. Beschleunigung des Fühlelements darauf hinweist, dass ein Fremdkörper im Erntegut enthalten ist. Dabei ist zu berücksichtigen, dass das Fühlelement sich mit wachsender Stärke der Erntegutmatte in eine erste Richtung und mit sinkender Stärke der Erntegutmatte in eine entgegen gesetzte, zweite Richtung bewegt. Somit besteht die Möglichkeit, nur in die erste Richtung gehende Bewegungen des Fühlelements, die auf ein Annähern eines Fremdkörpers an das Fühlelement hinweisen, zu berücksichtigen und nach Bestimmung der Geschwindigkeit bzw. Beschleunigung des Fühlelements mit dem Schwellenwert zu vergleichen, und die in die zweite Richtung verlaufenden Bewegungen zu ignorieren. Letztere, die u. a. darauf hinweisen können, dass der Fremdkörper das Fühlelement wieder verlässt, können jedoch auch (alternativ oder zusätzlich) berücksichtigt werden. Dazu können die Beträge oder Quadrate der Geschwindigkeits- und/oder Beschleunigungswerte mit entsprechenden Schwellenwerten verglichen werden.

Die Intensität der Schwankungen der Erntegutmattendicke kann u. a. von der Homogenität des Erntegutbestands oder von der Qualität eines aufgenommenen Schwads abhängen. Um durch Schwankungen der Erntegutdichte bedingte, unerwünschte Fehlauslösungen zu vermeiden, kann die Auswertungsschaltung in einer bevorzugten Ausführungsform der Erfindung die Positionsmessungen über eine bestimmte, der aktuellen Messung jeweils unmittelbar vorgehende Zeitspanne auswerten, um das Ausmaß der typischen Positionsänderungen des Fühlelements (bzw. der Geschwindigkeiten oder Beschleunigungen) zu bestimmen und zur selbsttätigen Bestimmung des Schwellenwerts heranzuziehen. Als Schwellenwert kann ein Mehrfaches (z. B. das Doppelte) der durchschnittlichen, auf eine Vergrößerung der Stärke der Erntegutmatte hinweisenden Geschwindigkeits- oder Beschleunigungswerte verwendet werden.

Als Positionssensor für das Fühlelement kann ein Potentiometer in einer linear verschiebbaren oder drehbaren Ausführungsform verwendet werden. Es können aber auch beliebige andere Positionssensoren verwendet werden, z. B. Induktionsabstandssensoren, auf Ultraschall oder Lichtwellen basierende Entfernungsmesser oder mehrere Lichtschranken.

Die Ausgangssignale des Positionssensors können auch zur Ertragsmessung und/oder zur selbsttätigen Siliermitteldosierung verwendet werden.

### Ausführungsbeispiel

Anhand der Abbildungen wird ein Ausführungsbeispiel der Erfindung erläutert. Es zeigen:
- Fig. 1: eine Seitenansicht einer selbstfahrenden Erntemaschine in Form eines Feldhäckslers mit einem Gutaufnehmer,
- Fig. 2: eine seitliche Ansicht des Einzugsgehäuses der Erntemaschine, und
- Fig. 3: ein Flussdiagramm, nach dem die Auswertungsschaltung arbeitet.

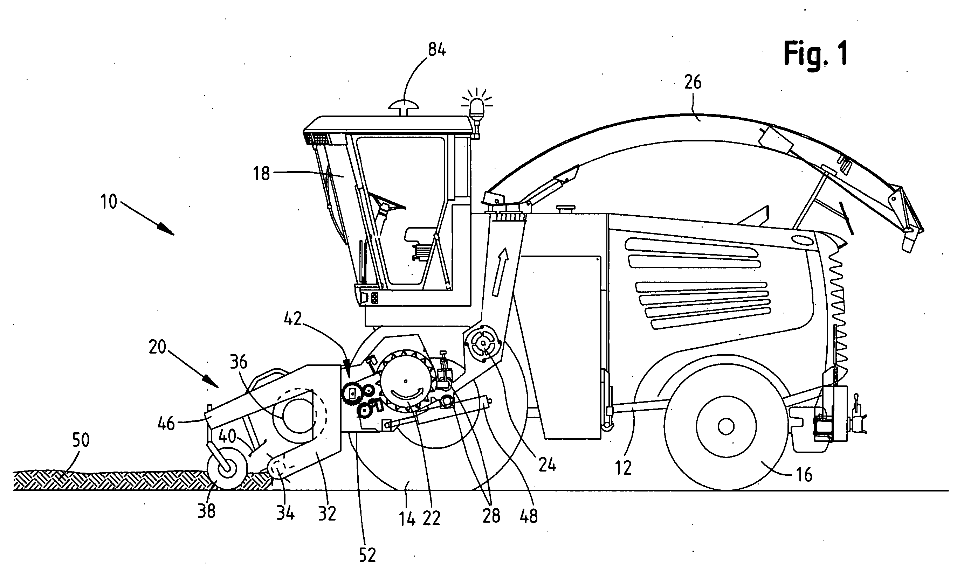

In der Figur 1 ist eine Erntemaschine 10 in der Art eines selbstfahrenden Feldhäckslers dargestellt. Die Erntemaschine 10 baut sich auf einem Rahmen 12 auf, der von vorderen angetriebenen Rädern 14 und lenkbaren rückwärtigen Rädern 16 getragen wird. Die Bedienung der Erntemaschine 10 erfolgt von einer Fahrerkabine 18 aus, von der aus ein Erntevorsatz in Form eines Gutaufnehmers 20 einsehbar ist. Mittels des Gutaufnehmers 20 vom Boden aufgenommenes Erntegut, z. B. Gras oder dergleichen wird über einen Einzugsförderer 42 mit Vorpresswalzen, die innerhalb eines Einzugsgehäuses 52 an der Frontseite des Feldhäckslers 10 angeordnet sind, einer Häckseltrommel 22 zugeführt, die es in kleine Stücke häckselt und es einer Fördervorrichtung 24 aufgibt. Das Gut verlässt die Erntemaschine 10 zu einem nebenher fahrenden Anhänger über einen um eine etwa vertikale Achse drehbaren und in der Neigung verstellbaren Austragschacht 26. Zwischen der Häckseltrommel 22 und der Fördervorrichtung 24 erstreckt sich eine Nachzerkleinerungsvorrichtung 28 mit zwei Körnerprozessorwalzen, durch die das zu fördernde Gut der Fördervorrichtung 24 tangential zugeführt wird.

Der Gutaufnehmer 20 ist als so genannte Pick-Up ausgebildet. Der Gutaufnehmer 20 baut sich auf einem Gestell 32 auf und stützt sich über beidseitig angebrachte Stützräder 38, die über je einen Träger 46 am Gestell 32 befestigt sind, auf dem Erdboden ab. Die Aufgabe des Gutaufnehmers 20 besteht darin, auf dem Boden eines Felds in einem Schwad 50 abgelegtes Erntegut aufzunehmen und es der Erntemaschine 10 zur weiteren Bearbeitung zuzuführen. Hierzu wird der Gutaufnehmer 20 während des Erntebetriebes mit geringem Abstand zum Erdboden über das Feld bewegt, während er zum Transport auf einer Strasse oder auf Wegen mittels eines Hydraulikzylinders 48 angehoben wird, welcher das Einzugsgehäuse 52 und den daran befestigten Gutaufnehmer 20 um die Drehachse der Häckseltrommel 22 verschwenkt. Der Hydraulikzylinder 48 dient auch zur Einstellung der Höhe des Gutaufnehmers 20 über dem Boden, bzw. zur Einstellung des Auflagedrucks der Stützräder 38 auf dem Erdboden. Zum Gutaufnehmer 20 gehört ein Abgabeförderer 36 in Form einer Förderschnecke, die das aufgenommene Gut von den Seiten des Gutaufnehmers 20 zu einer in der Mitte gelegenen, nicht gezeigten Abgabeöffnung fördert, hinter der der Einzugsförderer 42 folgt. Der Gutaufnehmer 20 weist auch einen, wie auch der Abgabeförderer 36, rotativ angetriebenen Aufnehmerrotor 34 auf, der unterhalb des Abgabeförderers 36 angeordnet ist und mit seinen Förderzinken das Gut vom Erdboden anhebt, um es dem Abgabeförderer 36 zu übergeben. Außerdem ist ein Niederhalter 40 in Form eines über dem Aufnehmerrotor 34 angeordneten Bleches am Gestell 32 befestigt.

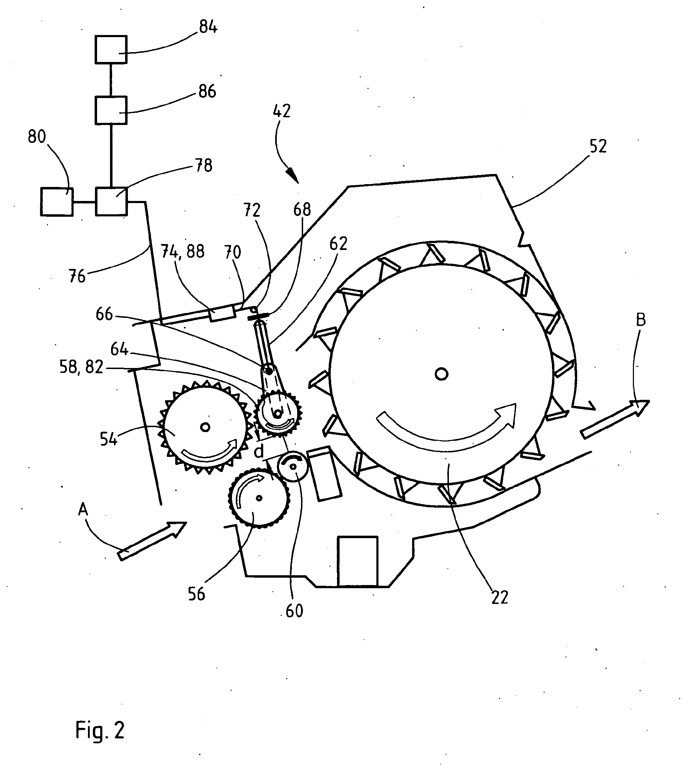

Im Folgenden beziehen sich Richtungsangaben, wie seitlich, unten und oben, auf die Vorwärtsbewegungsrichtung V des Gutaufnehmers 20, die in den Figuren 1 und 2 nach links verläuft.

Die Figur 2 zeigt Einzelheiten des Einzugsförderers 42 und der Häckseltrommel 22, die im Einzugsgehäuse 52 angeordnet sind. Der Einzugsförderer 42 enthält zwei vordere Vorpresswalzen 54, 56, die eine Vorverdichtung des bei A eintretenden Erntegutes bewirken. Eine homogene Verdichtung und Weiterführung des Ernteguts erfolgt dann zwischen den zwei hinteren Vorpresswalzen 58, 60, die einen variablen Abstand d zueinander aufweisen.

Die hintere untere Vorpresswalze 60 ist ortsfest gelagert, während die Welle der hinteren oberen Vorpresswalze 58 in seitlichen Schlitzen 62 geführt ist. An den beiden Enden der hinteren oberen Vorpresswalze 20 ist je ein sich nicht mitdrehender Flansch 64 angeordnet. Die beiden Flansche 64 tragen eine zur Vorpresswalze 58 parallele Querstrebe 66, die sich mit der Vorpresswalze 58 auf und ab bewegt und deren Enden ebenfalls in den seitlichen Schlitzen 62 geführt sind. Die hintere obere Vorpresswalze 58 kann sich im Wesentlichen in vertikaler Richtung zwischen einem unteren Anschlag und einem oberen Anschlag 68 bewegen. Die oberen Vorpresswalzen 54, 58 sind in an sich bekannter Weise durch die Kraft einer Feder und/oder eines Hydraulikzylinders (s. DE 10 2005 059 953 A und dort zitierter Stand der Technik) nach unten vorgespannt, während die unteren Vorpresswalzen 56, 60 starr am Einzugsgehäuse 52 gelagert sind.

Hinsichtlich ihrer Längserstreckung ist im mittleren Bereich der Querstrebe 66 ein Seil 70 angebracht, das über eine Umlenkrolle 72 zu einem Potentiometer 74 geführt ist. Hiermit wird ohne weitere Übertragungsverluste die vertikale Auslenkung der Querstrebe 66 und damit auch der hinteren oberen Vorpresswalze 58 erfasst und in einen Messwert umgewandelt, der abhängig ist von der Spaltbreite, bzw. dem Abstand d zwischen den beiden hinteren Vorpresswalzen 58, 60. Die im Potentiometer 74 erzeugte Widerstandsänderung wird in ein Spannungssignal umgewandelt und über eine Leitung 76 an eine Auswertungsschaltung 78 weitergeleitet. Aus Gründen der Reaktionsgeschwindigkeit wird für die Leitung 76 möglichst kein Bus, sondern eine direkte Verbindung verwendet. Ggf. kann aber auch ein hinreichend schneller Bus verwendet werden. Die Auswertungsschaltung 78 ist mit einer Einrichtung 80 zum Anhalten des Einzugsförderers 42 verbunden. Diese Einrichtung 80 kann in an sich bekannter Weise (s. DE 199 55 901 A und DE 102 07 467 A und den dort zitierten Stand der Technik, deren Inhalt durch Verweis mit in die vorliegenden Unterlagen aufgenommen wird) eine abschaltbare Kupplung im Antriebsstrang der Vorpresswalzen 54-60 und eine Sperrklinke umfassen, die zum Anhalten des Einzugsförderers 42 in Eingriff mit einem mit den Vorpresswalzen 54-60 in Antriebsverbindung stehenden Zahnrad bringbar ist. Es wäre auch denkbar, die Vorpresswalzen 54-60 hydraulisch oder elektrisch anzutreiben und zum Anhalten den Antrieb durch geeignete Ventile oder Schaltelemente selbsttätig anzuhalten oder gar umzukehren.

Anders als in der Zeichnung dargestellt, kann anstelle der hinteren Vorpresswalze 58 die vordere obere Vorpresswalze 54, die ebenfalls durch Federkraft nach unten vorgespannt ist, mit dem Potentiometer 74 verbunden sein. Es wäre auch denkbar, beide oberen Vorpresswalzen 54, 58 gemeinsam an einer Schwinge anzubringen und deren Position mit dem Potentiometer 74 zu erfassen.

In der in Figur 2 dargestellten Anordnung dient die hintere obere Vorpresswalze 58 als quer zur Erntegutförderrichtung beweglich angebrachtes, während des Erntebetriebs am aufgenommenen Erntegut anliegendes Fühlelement 82. Das Potentiometer 74 dient als Positionssensor 88 zur Erfassung der Position des Fühlelements 82 (d. h. der Vorpresswalze 58).

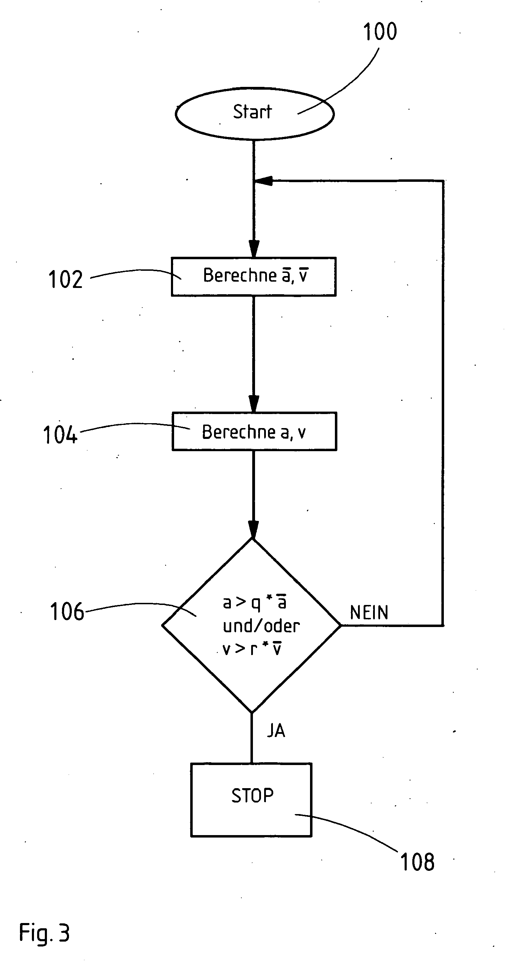

Die Figur 3 zeigt ein Flussdiagramm, nach dem die Auswertungsschaltung 78 während des Betriebs vorgeht. Nach dem Start im Schritt 100 wird im Schritt 102 anhand vorgehend aufgenommener Signale des Positionssensors 88 (Potentiometer 74) die durchschnittliche vertikale Geschwindigkeit des Fühlelements 82 über einen vorbestimmten Zeitraum von z. B. 10 s Dauer berechnet. Wenn die Erntemaschine 10 noch nicht über einen derart langen Zeitraum pausenlos im Betrieb war, kann auch ein vorbestimmter oder vom Bediener über eine geeignete Eingabeeinrichtung (z. B. Tastatur oder Drehknopf) eingebbarer Wert verwendet werden. Bei einer möglichen Ausführungsform werden bei der Berechnung der durchschnittlichen Geschwindigkeit nur positive Geschwindigkeitswerte berücksichtigt, die einer Bewegung des Fühlelements 82 nach oben entsprechen. Bei anderen Ausführungsformen werden die Absolutbeträge oder Quadrate aller Geschwindigkeitswerte berücksichtigt.

Alternativ oder zusätzlich wird im Schritt 102 anhand vorgehend aufgenommener Signale des Positionssensors 88 (Potentiometer 74) die durchschnittliche Beschleunigung des Fühlelements 82 über einen vorbestimmten Zeitraum von z. B. 10 s Dauer berechnet. Wenn die Erntemaschine 10 noch nicht über einen derart langen Zeitraum pausenlos im Betrieb war, kann auch ein vorbestimmter oder vom Bediener über eine geeignete Eingabeeinrichtung (z. B. Tastatur oder Drehknopf) eingebbarer Wert verwendet werden. Bei einer möglichen Ausführungsform werden bei der Berechnung der durchschnittlichen Beschleunigung nur positive Geschwindigkeitswerte berücksichtigt, die einer Beschleunigung des Fühlelements 82 nach oben entsprechen. Bei anderen Ausführungsformen werden die Absolutbeträge oder Quadrate aller Beschleunigungswerte berücksichtigt.

Im Schritt 104 wird die aktuelle Geschwindigkeit v des Fühlelements 82 berechnet. Dazu wird die Differenz aus der aktuellen Position des Fühlelements 82 und einer zuvor gemessenen Position des Fühlelements 82 bestimmt. Diese Differenz kann durch die zwischen den Messungen verstrichene Zeit dividiert werden, so dass man einen in m/s oder einer beliebigen anderen Einheit gemessenen Geschwindigkeitswert erhält. Alternativ oder zusätzlich wird im Schritt 104 die aktuelle Beschleunigung a des Fühlelements 82 berechnet. Dazu wird die Differenz aus der aktuellen Geschwindigkeit des Fühlelements 82 und einer zuvor gemessenen Geschwindigkeit des Fühlelements 82 bestimmt. Diese Differenz kann durch die zwischen den Messungen verstrichene Zeit dividiert werden, so dass man einen in m/s² oder einer beliebigen anderen Einheit gemessenen Beschleunigungswert erhält.

Im folgenden Schritt 106 wird die berechnete Geschwindigkeit v mit einem Schwellenwert verglichen, der durch Multiplikation der durchschnittlichen Geschwindigkeit mit einem Mehrfachen r (z. B. r=2) bestimmt wird. Hierbei können, wie oben beschrieben, nur positive, nach oben gerichtete Geschwindigkeiten berücksichtigt werden, oder Quadrate oder Absolutbeträge der Geschwindigkeit. Alternativ oder zusätzlich wird im Schritt 106 die berechnete Beschleunigung a mit einem Schwellenwert verglichen, der durch Multiplikation der durchschnittlichen Beschleunigung mit einem Mehrfachen q (z. B. q=2) bestimmt wird. Hierbei können, wie oben beschrieben, nur positive, nach oben gerichtete Beschleunigungen berücksichtigt werden, oder Quadrate oder Absolutbeträge der Beschleunigung.

Es wäre auch denkbar, im Schritt 106 die Geschwindigkeiten und/oder Beschleunigungen mit festen Schwellenwerten zu vergleichen, die fest einprogrammiert oder durch den Bediener über eine geeignete Eingabeeinrichtung (z. B. Tastatur oder Drehknopf) eingebbar sind. Diese Betriebsart kann auch durch den Bediener auswählbar sein, alternativ zur im vorhergehenden Absatz geschilderten Betriebsart.

Wenn der Schritt 106 ergibt, dass die Geschwindigkeit und/oder Beschleunigung kleiner als der Schwellenwert ist, kann davon ausgegangen werden, dass kein Fremdkörper mit dem Schwad 50 aufgenommen wurde, und es folgt wieder der Schritt 102. Anderenfalls folgt der Schritt 108, in dem die Auswertungsschaltung 78 die Einrichtung 80 zum Anhalten des Einzugsförderers 42 veranlasst, letzteren anzuhalten, da möglicherweise ein Fremdkörper aufgenommen wurde. Außerdem wird der Bediener in der Fahrerkabine 18 mittels einer geeigneten Anzeige und/oder eines akustischen Signals über das Ansprechen der Fremdkörpernachweiseinrichtung informiert. Der Bediener (oder eine entsprechende Automatik) kann dann ein Reversieren des Einzugsförderers 42 und vorzugsweise des Gutaufnehmers 20 veranlassen. Nach Beseitigen des Fremdkörpers folgt dann wieder der Schritt 102.

Die Auswertungsschaltung 78 und/oder die Einrichtung 80 zum Anhalten des Einzugsförderers 42 können auch mit einem in der Vorpresswalze 56 angeordneten, konventionellen Metalldetektor (nicht gezeigt) zum Nachweis ferromagnetischer Materialien verbunden werden.

Weiterhin führt die Auswertungsschaltung 78 einer mit einer GPS-Antenne 84 verbundenen Einrichtung 86 zur Ertragskartierung und/oder Siliermitteldosierung Signale zu, die eine Information über die Position des Fühlelements 82 enthalten. Sie dienen zur Erstellung von Ertragskarten bzw. zur Dosierung eines in den Erntegutstrom abgegebenen Siliermittels.

## Patentansprüche

1. Fremdkörpernachweiseinrichtung für eine landwirtschaftliche Erntemaschine (10), mit einem quer zu einer Erntegutförderrichtung beweglich angebrachten, während des Erntebetriebs am aufgenommenen Erntegut anliegenden Fühlelement (82), **dadurch gekennzeichnet, dass** die Fremdkörpernachweiseinrichtung einen zur Erfassung der Position des Fühlelements (82) eingerichteten Positionssensor (88) und eine Auswertungsschaltung (78) umfasst, welche betreibbar ist, anhand der Signale des Positionssensors (88) eine Information hinsichtlich der Geschwindigkeit und/oder Beschleunigung des Fühlelements (82) zu berechnen und zwecks Erzeugung eines auf die Aufnahme eines Fremdkörpers hinweisenden Signalwerts mit einem Schwellenwert zu vergleichen.

2. Fremdkörpernachweiseinrichtung nach Anspruch 1, **dadurch gekennzeichnet, dass** das Fühlelement (82) in Richtung auf das Erntegut zu vorgespannt ist.

3. Fremdkörpernachweiseinrichtung nach Anspruch 1 oder 2, **dadurch gekennzeichnet, dass** das Fühlelement (82) eine angetriebene oder frei mitlaufende Förderwalze (58) ist.

4. Fremdkörpernachweiseinrichtung nach einem der vorhergehenden Ansprüche, **dadurch gekennzeichnet, dass** das Fühlelement (82) einem Einzugsförderer (42) der Erntemaschine (10) zugeordnet ist.

5. Fremdkörpemachweiseinrichtung nach einem der vorhergehenden Ansprüche, **dadurch gekennzeichnet, dass** die Auswertungsschaltung (78) mit einer Einrichtung (80) zum Anhalten eines Einzugsförderers (42) der Erntemaschine (10) verbunden ist.

6. Fremdkörpemachweiseinrichtung nach einem der vorhergehenden Ansprüche, **dadurch gekennzeichnet, dass** die Auswertungsschaltung (78) betreibbar ist, den Schwellenwert aus zuvor erfassten Messwerten des Positionssensors (88) abzuleiten, um ihn den jeweiligen Erntebedingungen anzupassen.

7. Fremdkörpemachweiseinrichtung nach einem der vorhergehenden Ansprüche, **dadurch gekennzeichnet, dass** der Positionssensor (88) ein Potentiometer (74) umfasst.

8. Fremdkörpemachweiseinrichtung nach einem der vorhergehenden Ansprüche, **dadurch gekennzeichnet, dass** die Auswertungsschaltung (78) mit einer Einrichtung (86) zur Ertragskartierung und/oder Siliermitteldosierung verbunden ist.

9. Erntemaschine (10), insbesondere Feldhäcksler, mit einer Fremdkörpemachweiseinrichtung nach einem der vorhergehenden Ansprüche.

## Claims

1. Foreign body detector for an agricultural harvester (10), comprising a sensing element (82) which is fitted such that it is movable transversely to a direction of conveyance of the crop and which, during the harvesting operation, bears against the received crop, **characterized in that** the foreign body detector comprises a position sensor (88), set up to register the position of the sensing element (82), and an evaluation circuit (78), which can be operated to calculate on the basis of the signals of the position sensor (88) an information relating to the velocity and/or acceleration of the sensing element (82) and, for the purpose of generating a signal value indicating the take-up of a foreign body, to make a comparison with a threshold value.

2. Foreign body detector according to Claim 1, **characterized in that** the sensing element (82) is pretensioned in the direction of the crop.

3. Foreign body detector according to Claim 1 or 2, **characterized in that** the sensing element (82) is a driven or freely rotating conveying roller (58).

4. Foreign body detector according to one of the preceding claims, **characterized in that** the sensing element (82) is assigned to a gathering conveyor (42) of the harvester (10).

5. Foreign body detector according to one of the preceding claims, **characterized in that** the evaluation circuit (78) is connected to a device (80) for stopping a gathering conveyor (42) of the harvester (10).

6. Foreign body detector according to one of the preceding claims, **characterized in that** the evaluation circuit (78) can be operated to derive the threshold value from previously registered measurement values of the position sensor (88) so as to adapt it to the particular harvesting conditions.

7. Foreign body detector according to one of the preceding claims, **characterized in that** the position sensor (88) comprises a potentiometer (74).

8. Foreign body detector according to one of the preceding claims, **characterized in that** the evaluation circuit (78) is connected to a device (86) for mapping of the yield and/or for dosing of a silage additive.

9. Harvester (10), especially a forage harvester, comprising a foreign body detector according to one of the preceding claims.

## Revendications

1. Dispositif de détection de corps étrangers dans une machine agricole de récolte (10), le dispositif présentant un élément palpeur (82) installé de manière à pouvoir se déplacer transversalement par rapport à la direction de transport du produit récolté et appliqué sur le produit récolté accumulé pendant le fonctionnement de récolte,
**caractérisé en ce que**
le dispositif de détection de corps étrangers comprend un détecteur de position (88) destiné à détecter la position de l'élément palpeur (82) et un circuit d'évaluation (78) qui peut être utilisé pour calculer à l'aide des signaux du détecteur de position (88) une information concernant la vitesse et/ou l'accélération de l'élément palpeur (82) et pour la comparer à une valeur de seuil en vue de former une valeur de signal qui indique l'introduction d'un corps étranger.

2. Dispositif de détection de corps étrangers selon la revendication 1, **caractérisé en ce que** l'élément palpeur (82) est précontraint en direction du produit récolté.

3. Dispositif de détection de corps étrangers selon les revendications 1 ou 2, **caractérisé en ce que** l'élément palpeur (82) est un cylindre de transport (58) entraîné ou se déplaçant librement.

4. Dispositif de détection de corps étrangers selon l'une des revendications précédentes, **caractérisé en ce que** l'élément palpeur (82) est associé à un transporteur d'introduction (42) de la machine de récolte (10).

5. Dispositif de détection de corps étrangers selon l'une des revendications précédentes, **caractérisé en ce que** le circuit d'évaluation (78) est relié à un dispositif (80) de retenue d'un transporteur d'introduction (42) de la machine de récolte (10).

6. Dispositif de détection de corps étrangers selon l'une des revendications précédentes, **caractérisé en ce que** le circuit d'évaluation (78) peut être utilisé pour déduire la valeur de seuil de valeurs de mesure du détecteur de position (88) déterminées précédemment, pour l'adapter aux différentes conditions de récolte.

7. Dispositif de détection de corps étrangers selon l'une des revendications précédentes, **caractérisé en ce que** le détecteur de position (88) comprend un potentiomètre (74).

8. Dispositif de détection de corps étrangers selon l'une des revendications précédentes, **caractérisé en ce que** le circuit d'évaluation (78) est relié à un dispositif (86) de suivi du rendement et/ou de dosage d'agent d'ensilage.

9. Machine de récolte (10), en particulier moissonneuse-hacheuse, dotée d'un dispositif de détection de corps étrangers selon l'une des revendications précédentes.
